Europäisches Patentamt

(19) **European Patent Office**

Office européen des brevets

(11) Publication number: **0 029 342**
**A1**

(12) # EUROPEAN PATENT APPLICATION

(21) Application number: **80304054.2**

(22) Date of filing: **12.11.80**

(51) Int. Cl.³: **G 01 M 3/38,** E 03 F 7/00, F 17 D 5/02

(30) Priority: **20.11.79 GB 7940161**

(43) Date of publication of application: **27.05.81** Bulletin **81/21**

(84) Designated Contracting States: **AT BE CH DE FR IT LI LU NL SE**

(71) Applicant: **EDMUND NUTTALL LIMITED, 22, Grosvenor Gardens, London, SW1W ODR (GB)**

(72) Inventor: **Naylor, Peter, 21 Suffield Close Selsdon Ridge, Selsdon South Croydon Surrey (GB)**

(74) Representative: **Smith, Geoffrey Leonard et al, Marks & Clerk 57/60 Lincoln's Inn Fields, London WC2A 3LS (GB)**

(54) **Remote inspection equipment.**

(57) An inspection device for use in confined or inaccessible locations comprising a carriage having a body (11) mounted on skids (not shown) or other means for transport within the location. The body carries a unit (32) so as to be adjustable longitudinally by a motor (44), angularly by a motor (37), and radially by a motor (56). The unit carries a camera (49) movable between a position (49a) where it is trained along the lined pipe in a generally radial position. A second camera (41) is mounted in fixed position on the unit (32).

0029342

- 1 -

Remote inspection equipment

This invention relates to remote inspection equipment for use in pipe lines or other confined spaces for inspection of such spaces and possibly also for the monitoring of operations carried on in such spaces.

Various proposals have been made for moving television cameras through pipes or conduits for purposes of inspection. For example, United Kingdom Patent Specification 1474593 shows a camera mounted on skids. This camera is not shown as having any adjustment in relation to the skids. United Kingdom patent specification 1345108 discloses the use of a camera or a carriage, the camera head being rotatable about the optical axis of a camera lens. This enables the wall of a pipe to be viewed directly and radially. In United Kingdom Patent specification 1097585 there is shown a lens assembly which is pivotable on the camera tube to enable a better view to be obtained when looking generally axially along a curved pipe.

According to the invention, there is provided a remotely controllable television camera unit comprising a carriage adapted to be moved within a confined or inaccessible space and clamped in position therein, and a television camera pivotally mounted on the carriage for movement between an axially directed position and a generally radially directed position and provided with remotely controlled means for pivoting the camera, adjusting the position of the camera longitudinally of the carriage and for operating the camera.

A typical use would be in the inspection of water mains and sewers which are too small for access e.g. in the range from about 9 inches (22.5 cm) up to 24 inches (60 cm). Many other uses will arise wherein it is required to inspect a space too small for human access by using a remotely controlled television camera. In particular, the equipment may also carry means for carrying out an operation in the space, e.g. cutting a lateral connection aperture in the lining of a newly lined pipe.

The camera may for example be mounted on a sliding block to achieve radial adjustment, and the sliding block may be rotated, together with a co-operating slideway to achieve rotary adjustment.

In order to provide for longitudinal adjustment on the carriage, the block and its slideway may be longitudinally adjustable on the carriage.

Alternatively the camera may be mounted for angular adjustment on the carriage and the mounting may be longitudinally adjustable.

The carriage may be provided with skids to assist in its transport and provided with a clamping pad to hold it in selected position.

The arrangement will normally carry lighting for illuminating the area to be covered by the camera. Further, an additional camera may be provided to give an off-centre view longitudinally from the carriage.

The invention will be further described with reference to the accompanying drawings, which show a preferred embodiment of the invention and in which :-

Figure 1 is a side elevation of a carriage showing its support and clamping arrangement;

Figure 2 is an end elevation of the carriage of Figure 1;

Figure 3 is a partial view of the carriage of Figure 1;

Figure 4 is a vertical sectional view of the carriage of Figure 1 with additional parts shown in elevation;

Figure 5 is an end elevation of the structure of figure 4;

Figure 6 is a partial plan view of the structure of Figure 4;

Figure 7 is a view similar to Figure 4 showing some modifications; , and

Figure 8 is a perspective view showing the modified assembly.

Attention is drawn to co-pending application No.8 filed simultaneously herewith and entitled "Lining Cutter and Cutting Method", and claiming priority from United Kingdom application No. 7940162.

In that application there is described and claimed a lining cutter including a remotely controlled television camera, and the description that follows is similar to that in the said co-pending application. However, the inspection of the confined interiors of pipes and other confined spaces by remotely controlled television cameras, and also the monitoring of activities other than cutting renders the equipment useful with or without the provision of a cutter.

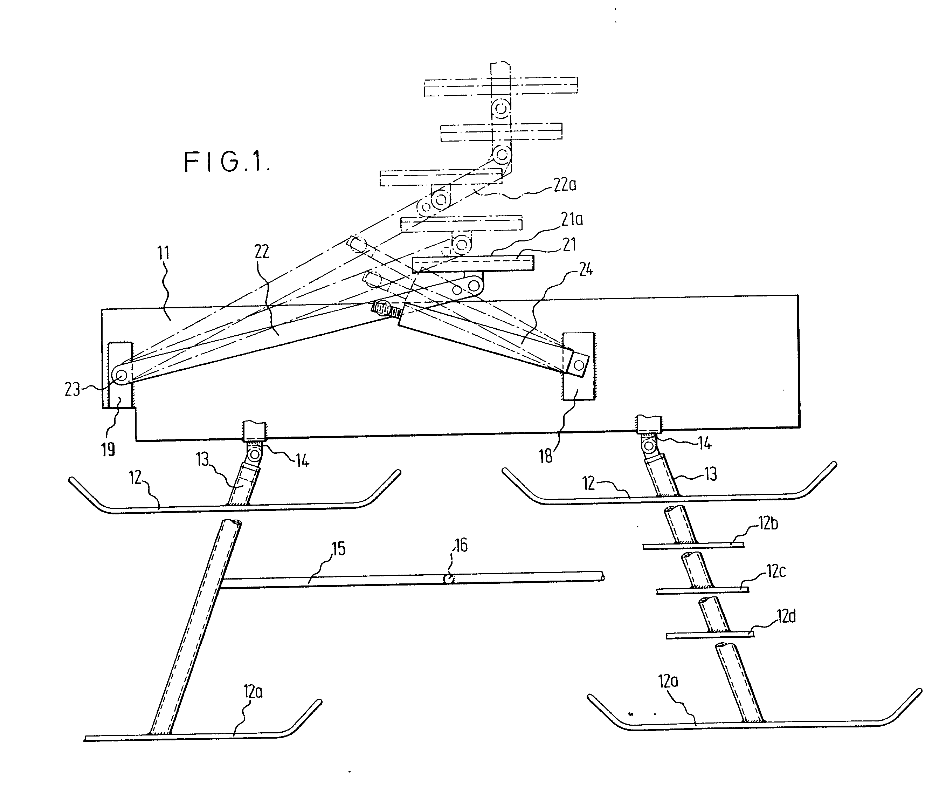

Turning now to figures 1 to 3, the body of a carriage is shown in outline at 11, and these figures are designed to show the supports on which the carriage 11 may be drawn through a lined pipe, or other confined space, and then clamped in position.

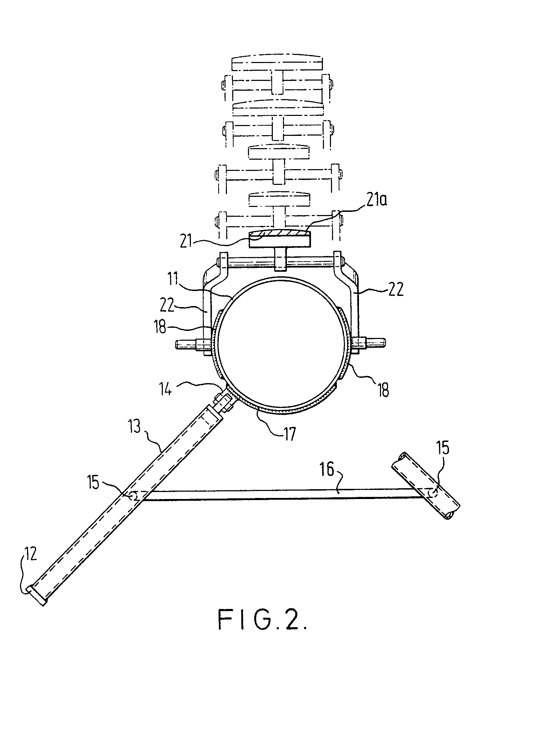

It will be understood that lined pipes come in a number of sizes, most of which are standardised, but a number of which are custom built. It is envisaged that the carriage 11 will be provided with skids 12 for a number of standard sizes, e.g. for pipes of 9 inches (22.5 cm), 12 inches (30 cm), 15 inches (37.5 cm), 18 inches (45 cm) and 24 inches (60 cm) diameter pipes. The skids will be in sets of four, i.e. a pair of trailing skids and a pair of leading skids for each standard size, and the variation will be achieved by differences in the length of the struts 13 extended between the skids 12 and skid supporting brackets 14. The struts 13 will be secured to the brackets 14 by means of pins and circlips so as to be reasonably readily removable and replaceable. Figure 1 shows a skid 12 of a small size and a skid 12a of a larger size, and indicates the positions at 12b, 12c, and 12d of skids of the intermediate sizes. In view of the length of the struts 13 for the skids of the larger and intermediate sizes, longitudinal and lateral tie rods 15 and 16 are provided and are illustrated in their positions for the large size 12a. It will be seen from Figure 2 in particular that the body 11 is provided with a reinforcing band 17 in the zone of attachment of each of the brackets 14.

When the body 1 is mounted on skids of the appropriate size, it will be substantially centrally located within the standard size pipe, and when working in a non-standard pipe, the body will be as nearly centralised as is possible by choice of the appropriate set of skids.

In order to stabilise the position of the body 11 in a pipe, it is provided with a clamping pad 21 pivotally mounted on a pair of jacking arms 22 themselves pivoted at 23 to the body 11. Each jacking arm 22 is associated with a pneumatic ram 24 pivoted both on the body 11 and on the jacking arm 22 so as to push the resilient face 21a of the clamping pad against the pipe lining. The ram 24 is preferably single acting so that in the event of failure of the air supply, the carriage
is released from the lining and can be removed. Various positions
of the pad 21 are illustrated particularly in Figure 2.

For some of the larger sizes of pipe, the jacking arms 22 may
be extended by extension arms 22a to increase their length
sufficiently for adequate movement of the pad 21 with a fairly
limited stroke of the rams 24. It will be seen that the body
is also provided with reinforcements 18 and 19 where the pivot
pins for the rams 24 and jacking arms 22 are connected. For
clarity of illustration, the rams 24 have been omitted from
Figure 2.

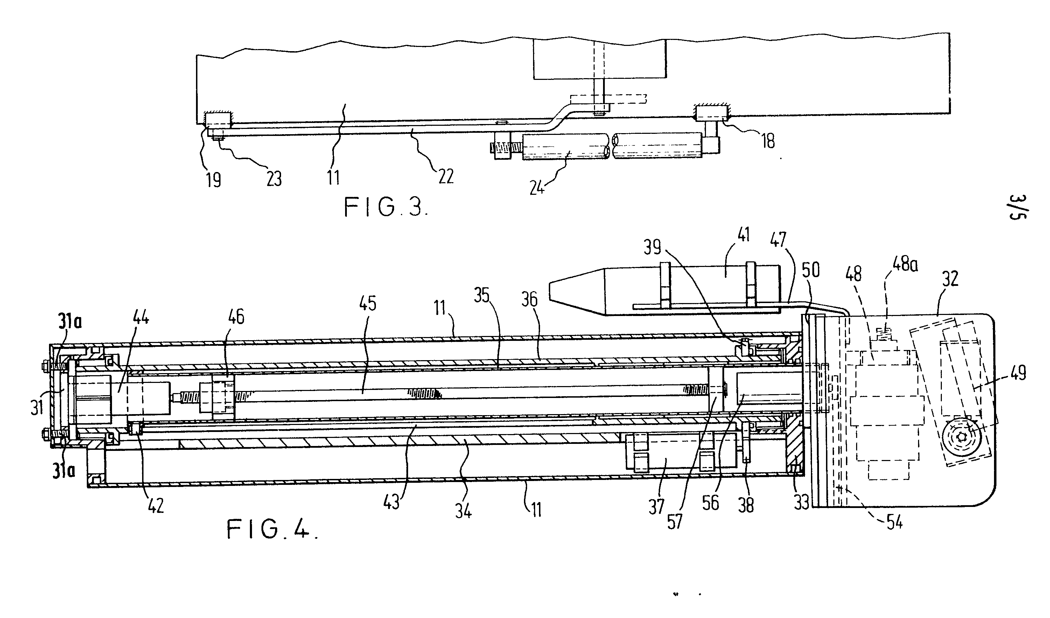

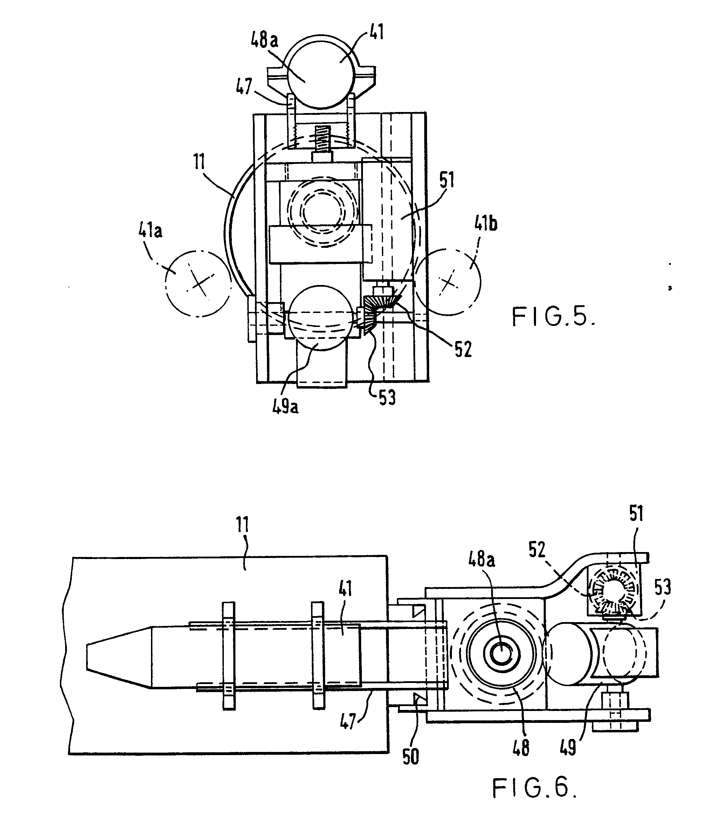

Turning now to Figure 4, this shows details of the internal
components of the body 11, and also shows a cutter and camera
unit which is indirectly mounted on the body so as to be carried
thereby through the pipe and adjusted and operated within the
pipe under remote control, with monitoring by the camera.
The interior of the body 11 is maintained under a slight superatmospheric pressure so as to prevent inward leakage of dust
and other foreign matter. Fixedly mounted with the body 11
by means of screws 31a is a rear end plate 31, and at the opposite
end adjacent the camera unit indicated generally by 32 is a
front end plate 33, also fixed. Also fixedly mounted within
the body is a chassis plate 34. The unit 32 is mounted on
a main shaft 35 which is longitudinally adjustable with respect
to a rotary shaft 36 which is mounted in bearings in or on
the end plates 31 and 33. Rotation of the shaft 36 is obtained
by means of a motor and gear box unit 37 having a drive pinion
38 meshing with a pinion 39 solid on the shaft 36. The motor
37 is reversible and is designed so that the shaft 36 can carry
the unit 32 through an arc of about 260°. In order to see
the extent of this arc, reference may be made to figure 5 which
shows a second camera 41 mounted in fixed position on the unit,
and its extreme positions are shown at 41a and 41b.

In order that the axial position of the unit 32 may be varied in relation to the body 11, the main shaft 35 is slidable within the rotating shaft 36 and is prevented from rotation relative thereto by means of a sliding stud 42 engaged in a guide slot 43 in the rotating shaft 36. In order to achieve controlled longitudinal movement of the shaft 35, a reversible motor 44 is mounted on the rear end plate 31 and drives a lead screw 45 co-operable with a captive nut device 46 solid with the shaft 35. By this means, a fine and continuous adjustment of the position of the unit 32 axially relative to the body 11 can be achieved.

The unit 32 itself carries the camera 41 already referred to mounted on cantilever brackets 47, and in addition it carries a pneumatic cutter motor 48 with an output 48a adapted to mount a suitable cutter which is chosen to meet the duty in hand. The motor casing is also fixedly mounted on the unit 32. Also mounted on the unit is a second television camera 49 which is pivotable from the generally radial position shown in Figures 4 and 6, in which it is trained on the aperture end of the cutter to a forwardly pointing position illustrated in phantom in Figure 4 and in full lines in Figure 5 indicated by the reference 49a. Limit stops may be provided to stabilize the camera in these two end positions, and the drive between them is obtained from a reversible motor 51 having an output bevel gear 52 co-operating with a bevel gear 53 connected to the mounting for the camera 49. The camera 49 may be stopped at any required intermediate position.

In order to provide radial adjustment of the cutter, and cameras 41 and 49, the unit 32 is mounted in a slideway 50, and is provided with a rack 54 co-operable with a pinion 55 driven by a reversible motor and gear box unit 56 mounted for movement with the shaft 35 by means of a plate 57.

It is envisaged that the motors 37, 44, 51 and 56 will all be electrically driven. The unit 32 will also carry lights for illuminating the area being worked on by the cutter driven by the motor 48, and also directed along the pipes in the direction of movement of the carriage, namely to the right as illustrated so as to illuminate the area covered by the camera 41 and the camera 49 when in the forwardly pointing position.

The air supply for the ram 24 and the cutter motor 48 will be controlled by solenoid valves mounted in or on the body 11.

When a pipe is provided with a lining in the manner hereinbefore described, the lining is cured under a certain amount of pressure, and therefore bulges somewhat into the lateral connections to the original pipe line, and these bulges can be viewed by means of the cameras 41 and 49 pointing down the pipeline. The carriage is winched through the pipeline with the lighting on and the cameras trained forward, and the operator can see when a bulge, indicating a lateral connnection, is approached. He then stops the carriage by braking the winch and extends the rams 24 to push the clamping plate 21 against the lining to stabilize the body 11. The camera 49 is then swung into the position where it is trained on the working end of the cutter and the longitudinal and rotary positions of the unit 32 are adjusted until the cutter is lined up on the point to be cut. The motor 56 is then started to advance the cutter and the motor 48 is also started when appropriate to commence cutting. If longitudinal, angular or radial adjustment of the cutter is required during cutting, this can be continuously carried out by appropriate operation of the motors 44, 37 and 56, and when the cut is complete the unit 32 is returned to the rest position, the carriage is released by retraction of the rams 24, the camera 49 returns to its forward pointing position and the winching recommenced.

If required, splash guards can be provided to minimise the amount of splashing onto the lens of the camera 49 in particular.

The space within the body 11 and below the shaft 36 in the position illustrated in Figure 4 may be utilised for spare pipeline and cable to enable controls to be taken to the motor 56 as it moves longitudinally relative to the body 11, and the area below the chassis plate 34 is preferably also used to house printed circuit boards for the controls and also for the television cameras. By mounting the bulk of the electronic components of the cameras 49 and 41 within the body, the size of the cameras themselves to be mounted on the unit 32 can be reduced, and the advantages of this will be clear. Also some preset controls for the cameras, which may need to be periodically adjusted are mounted for access from outside the body 11, so that the unit need not be dismantled for the adjustment to be made.

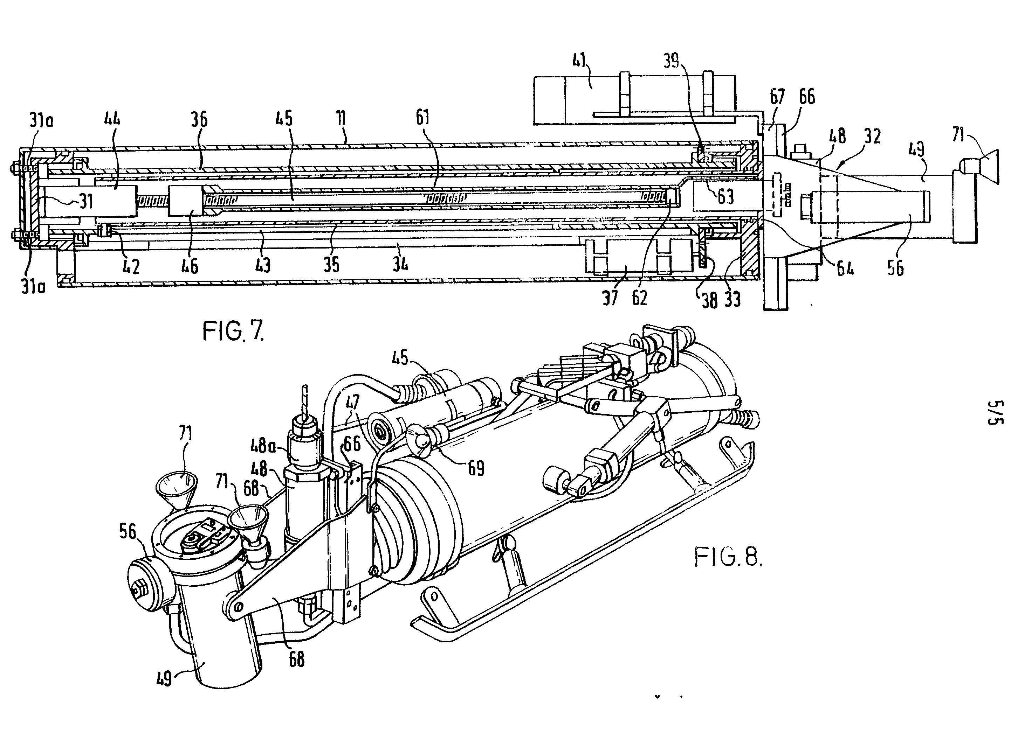

Turning now to figures 7 and 8, various modifications are shown. In particular figure 7 shows the lead screw 45 as being slidably mounted in a guide tube 61 by means of an enlarged head 62. This gives support for the screw 45 while enabling reasonable simple dismantling for maintenance. The guide tube 61 acts as a mount for the captive nut 46 and has a tongue 63 solidly attached to end plate 64 on the main shaft 35. Also, as shown in both figures 7 and 8, the camera and cutter unit 32 is arranged so that only the cutter 48 and its motor are mounted on a slide 66 co-operating with a slideway 67 solid with the end plate 64 as the main shaft 35. The camera 49 and its tilt motor and gear box unit 56 are mounted on brackets 68 solid with the slideway 67 and the cantilever arms 47 for the camera 41 are also mounted on the brackets 68. Also shown are lights 69 on the camera 41 and a pair of lights 71 on the camera 49, which is shown in an intermediate position in figure 8 for clarity of illustration.

The cable for the tiltable camera 49 is taken in _via_ the centre of a hollow pivot shaft or trunnion.

The exhaust air from the air motor 48 may be used to provide an air curtain to reduce splatter onto the camera 49.

Although the present invention has been particularly described in conjunction with a cutter it will be appreciated that the remotely adjustable television camera arrangement finds many uses independently of the cutter in the inspection of pipelines and other confined or inaccessible spaces and in monitoring processes other than cutting.

CLAIMS

1.    A remotely controllable television camera unit comprising
a carriage adapted to be moved within a confined or inaccessible
space and a television camera mounted on the carriage, characterised
in that the television camera is pivotally mounted on the carriage
for movement between an axially directed position and a radially
directed position, the carriage is provided with means for
clamping it in position in the space and is provided with remotely
controlled means for pivoting the camera, adjusting the position
of the camera longitudinally of the carriage and for operating
the camera.

2.    A unit according to claim 1, characterised in that the
camera is mounted on a sliding block to achieve radial adjustment.

3.    A unit according to claim 2, characterised in that the
block is driven relative to a co-operating slideway by a rack
and pinion drive.

4.    A unit according to claim 3, characterised in that the
block and slideway are rotatable on the carriage to achieve
an angular adjustment of the camera.

5.    A unit according to claim 3 or 4, characterised in that
the block and slideway are longitudinally adjustable on the
carriage.

6.    A unit according to claim 1, in which the camera is mounted
on a support for angular and axial adjustment on the carriage.

7.    A camera unit according to any of the preceding claims,
characterised by including lighting means for illuminating
the area to be covered by the camera.

0029342

2.

8.    A camera unit according to any of the preceding claims, characterised by comprising a further camera directed to give an off-centre view longitudinally from the carriage.

FIG.1.

1/5

FIG.2.

FIG.3.

19    23    11    22    24    18

FIG.4.

31a    44    46    45    11    35    36    39    41    47    50    48    48a    32

31    31a    42    43    34    11    37    57    56    38    33    54    49

FIG.5.

FIG.6.

FIG. 7.

FIG. 8.

0029342

# EUROPEAN SEARCH REPORT

European Patent Office

**0029342**

Application number

EP 80 30 4054

## DOCUMENTS CONSIDERED TO BE RELEVANT

| Category | Citation of document with indication, where appropriate, of relevant passages | Relevant to claim |
|---|---|---|
| A | US - A - 3 761 623 (A. HARA et al.)<br><br>* abstract; figures * | 1 |
| | -- | |
| A | US - A - 2 849 530 (J.H. FLEET)<br><br>* column 2, lines 53 to 72; column 3, lines 1 and 2; figure 2 * | 1 |
| | -- | |
| A | US - A - 3 715 484 (R.C. LATALL)<br><br>* abstract; figures * | 1 |
| | -- | |
| A | US - A - 3 885 091 (H.D. FISH et al.)<br><br>* abstract; figures * | 1 |
| | ------- | |

### CLASSIFICATION OF THE APPLICATION (Int. Cl.³)

G 01 M 3/38
E 03 F 7/00
F 17 D 5/02

### TECHNICAL FIELDS SEARCHED (Int. Cl.³)

G 01 M 3/38
          3/00
G 01 N 21/88
H 04 N 7/18
F 16 L 55/00
E 03 F 7/00
B 25 J 19/00
F 17 D 5/02
          5/06

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-02-981 | VAN ASSCHE |

EPO Form 1503.1   06.78